# EUROPÄISCHE PATENTSCHRIFT

(11) **EP 1 941 794 B1**
(45) Veröffentlichungstag und Bekanntmachung des Hinweises auf die Patenterteilung: **19.08.2009**
(21) Anmeldenummer: 07405001.4
(22) Anmeldetag: 03.01.2007
(51) Int. Cl.: A01J 25/16

(54) **Käsepflegeroboter**
Robot for treating cheese
Robot de traitement de fromage

(43) Veröffentlichungstag der Anmeldung: 09.07.2008
(73) Patentinhaber: Leu Anlagenbau AG, 3661 Uetendorf (CH)
(72) Erfinder: Zenger, Thomas, 3632 Niederstocken (CH)
(74) Vertreter: AMMANN PATENTANWÄLTE AG BERN

(56) Entgegenhaltungen:
- EP-A1- 0 316 281
- CH-A5- 685 226

## Beschreibung

Die vorliegende Erfindung bezieht sich auf einen Käsepflegeroboter gemäss Oberbegriff des Anspruchs 1, siehe CH-A-685226.

Während der Reifung werden Käselaibe in Regalen (auch: Gestelle; Bankungen) gelagert. Die Laibe von Hartkäsesorten weisen dabei die grössten Ausmasse aus, um ein niedriges Verhältnis des Gewichts von Rinde zu Käsemasse einzustellen. Entsprechend weisen diese Laibe ein hohes Gewicht auf. Ein Laib Emmentaler kann z. B. ein Gewicht von über 100 kg aufweisen.

Während der Reifung müssen die Käselaibe relativ häufig gepflegt und behandelt werden. Dazu müssen die Laibe aus den Regalen geholt, gepflegt (getrocknet; mit einer Pflegeflüssigkeit behandelt usw.), gegebenenfalls gewendet und wieder in das Regal zurückgelegt werden. Insbesondere in grossen Käsereien wird diese Arbeit von Käsepflegerobotern im Wesentlichen automatisch durchgeführt. Die Roboter bewegen sich dabei selbstständig in den Gängen zwischen den Regalen und pflegen die Laibe. In kleineren Käsereien finden Roboter Anwendung, die die Käse aus den Regalen entnehmen und für die manuelle Pflege oder Bearbeitung zur Verfügung stellen. Umgekehrt dienen sie auch dazu, die Käse wieder in die Regale zurückzulegen. Auch in grossen Käsereien ist es nötig, die Käselaibe den Regalen für den Transport zu entnehmen oder neue Laibe einzustellen, wofür eine Mechanisierung und Automatisierung vorteilhaft ist.

Die bekannten, vollautomatischen Käsepflegeroboter umfassen ein fahrbares, motorisch angetriebenes Chassis mit einer Konsole am einen Ende. An die Konsole schliesst sich in dieser Reihenfolge die Pflegestation und die Handhabungseinheit an. Das relativ starre, kompakte Gehäuse der Pflegestation, die sich dabei etwa in der Mitte des Pflegeroboters befindet, trägt zur Stabilität der Maschine bei, was sich insbesondere bei der Handhabung schwererer Käselaibe vorteilhaft bemerkbar macht. Nachteilig an dieser Ausführung ist jedoch, dass wegen der Enge zwischen den Regalen die Pflegestation während des Betriebs des Pflegeroboters schlecht von aussen zugänglich ist. Eine direkte Intervention eines Bedieners bei eventuellen Problemen in der Pflegestation ist nicht möglich, da der Zugriff einerseits durch die Handhabungseinheit und andererseits durch die Konsole und Fahreinheit versperrt wird. Vielmehr muss der Roboter erst aus dem Gang herausgefahren werden, damit ein seitlicher Zugang möglich ist.

Die einfacheren reinen Handhabungsroboter sind dagegen Spezialkonstruktionen und für nichts anderes als die ihnen zugedachte Aufgabe einsetzbar. Im Wesentlichen bestehen sie aus einer Konsole, einer Handhabungseinheit zum Entnehmen und Einlagern der Käselaibe und einer Ausgabestation. Im Unterschied zu einem Pflegeroboter können Käselaibe hier automatisch ab einer Palette oder aus einem Gestell (Hurde) ein- und ausgelagert werden.

Ein anderer Nachteil der bekannten Käsepflegeroboter ist daher, dass sie jeweils nur entweder für die vollautomatische Käsepflege und Ein-/Auslagern einzelner Laibe mit der Aufgabe von Hand oder für das reine Ein- und Auslagern von Käselaiben einsetzbar sind.

Eine Aufgabe der vorliegenden Erfindung besteht darin, einen Käsepflegeroboter mit besserer Zugänglichkeit zur Pflegestation anzugeben. Eine weitere Aufgabe besteht darin, einen Käsepflegeroboter anzugeben, der auch ein automatisches Ein- und Auslagern von Käselaiben gestattet.

Ein Käsepflegeroboter, der die erstgenannte Aufgabe erfüllt, ist im Anspruch 1 angegeben. Die weiteren Ansprüche geben bevorzugte Ausführungsformen an.

Demgemäss zeichnet sich der erfindungsgemässe Käsepflegeroboter dadurch aus, dass neben den nötigen Aggregaten für die Fortbewegung ungefähr mittig eine Handhabungseinheit angeordnet ist. Sie besteht aus einer Einrichtung zum Erfassen eines Käselaibes, die in der Höhe verfahrbar ist und in der Lage ist, seitlich in die Regale hineinzugreifen, um Käselaibe herauszunehmen bzw. wieder in dem Regal abzulegen. Auf der einen Seite dieser Handhabungseinheit befindet sich eine Bedienungskonsole für den Roboter. Auf der anderen Seite ist die Pflegestation angeordnet. Die Konsole, die z. B. Steuerorgane und Energiezufuhreinrichtungen umfasst, ist daher von hinten und die Pflegestation und die Vorratsgefässe sind von vorn zugänglich, auch wenn sich der Roboter in einem Gang zwischen Regalen befindet.

In einer bevorzugten Ausführungsform ist statt der Pflegestation eine vielseitige Aufnahmeeinrichtung mit Vorkehrungen vorhanden, wie mechanische Aufnahmen (Schienen; Klammern; Schlösser), um die Pflegestation oder eine andere Einrichtung, z. B. einen Ablagetisch, aufzunehmen. Zusätzlich sind auch die nötigen, abnehmbaren Kraft- und Steueranschlüsse vorhanden, namentlich elektrische Stecker und andere Verbinder, um die Aktuatoren in der Einrichtung oder der Pflegestation in Betrieb setzen zu können. Eine Steuerung dieser Aktuatoren kann über die Konsole des Käsepflegeroboters erfolgen. Ohne weiteres ist einzusehen, dass bei diesem Aufbau mit der Handhabungseinheit zwischen Konsole und Aufnahmeeinrichtung für Pflegestation oder eine andere Einrichtung sowohl Konsole als auch die Einrichtung in der Aufnahmeeinrichtung für eine Bedienungsperson auch dann zugänglich sind, wenn sich der Roboter in einem Gang befindet.

Durch die Auswechselbarkeit der Funktionseinheit in der Aufnahmeeinrichtung ergibt sich ein modulares Konzept, das es z. B. gestattet, den Pflegeroboter mit geringem Aufwand von einer vollautomatischen Einheit zu einer Einheit für die manuelle Handhabung (Ein- und Auslagern, Qualitätskontrolle) der Käse umzukonfigurieren. Insbesondere ist es dadurch möglich, den Käseroboter auch dazu zu verwenden, in Regalsystemen die fertig gereiften Käse den Regalen zu entnehmen und für den Abtransport auf Paletten zur Verfügung zu stellen.

Die Erfindung wird weiter an einem Ausführungsbeispiel unter Bezugnahme auf Figuren erläutert. Es zeigen
- Fig. 1: eine Gesamtansicht eines erfindungsgemässen Käsepflegeroboter-Systems;
- Fig. 2: eine Seitenansicht eines Käsepflegeroboters mit Pflegeeinheit in einer ersten Ausführungsform;
- Fig. 3: eine Ansicht ähnlich Fig. 2 einer zweiten Ausführungsform eines Pflegeroboters;
- Fig. 4: die erste Ausführungsform des Roboters mit einem Käselaib.

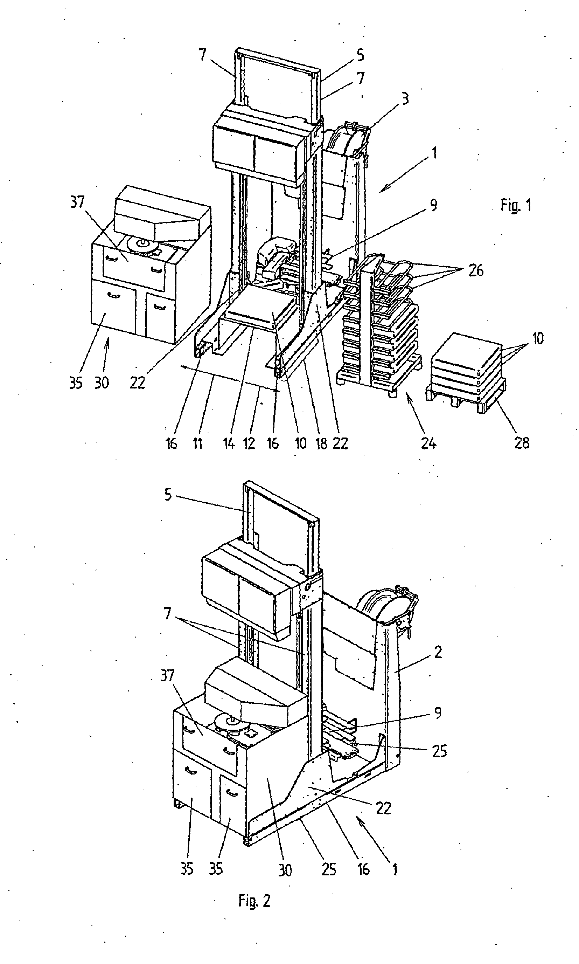

Der Käsepflegeroboter 1 der Fig. 1 weist am abgewandten Ende die Bedienungskonsole (Schaltschrank) auf, von der im Wesentlichen nur die Kabelrolle 3 für das Stromversorgungskabel (nicht dargestellt) sichtbar ist. Die Räder sind im Chassis eingebaut. Die Maschine kann am Boden oder auf Schienen fahren. Das fahrbare Chassis ist an sich bekannt und besteht im Wesentlichen aus einem motorisch angetriebenen Fahrwerk, das den hygienischen Vorschriften in Käsekellern genügt. Die Ausgestaltung des Chassis selbst wird entsprechend dem Stand der Technik ausgeführt, eine weitere Erläuterung ist daher nicht nötig.

Etwa in der Mitte befindet sich der Mast 5 der Handhabungseinheit. Er bildet im Wesentlichen ein Portal, in dessen senkrechten Holmen 7 der Greifer 9 für eine vertikale Bewegung geführt ist. Der Greifer 9 wie auch der Mast 7 ist ansonsten gemäss dem bekannten Stand der Technik ausgeführt. D. h., der Greifer 9 ist in der Lage, gemäss Pfeilen 11, 12 seitlich aus dem Roboter in Regale auszufahren und einen dort liegenden Käselaib zu ergreifen und in den Roboter hineinzutransportieren. Der Käselaib 10 wird dann gedreht, gegebenenfalls durch den Greifer 9 gewendet und durch den Mast 7 hindurch auf einen Tisch 14 abgelegt. Vom Tisch 14 kann er manuell entnommen werden zum Abtransport oder zu einer Pflege.

Das Einlagern eines Käselaibes in ein Regal erfolgt entsprechend durch die umgekehrte Arbeitsweise, wobei der Greifer 9 einen Käselaib 10 vorn Tisch 14 aufnimmt und durch die umgekehrte Bewegung wieder in einem Regal ablegt.

Im Unterschied zu den vorbekannten Käsepflegerobotern erzwingt beim erfindungsgemässen Roboter 1 der Mast 5 eine offene Bauweise in der Mitte. Die stabilisierende Wirkung der konventionell in der Mitte angeordneten Pflegestation durch ihr Gehäuse entfällt damit. Entsprechend wird der Rahmen 16 des Käsepflegeroboters 1 stabiler ausgeführt. Da auch das Vorderteil 18 offen ausgeführt ist, um verschiedene Einheiten verschiedener Funktion aufzunehmen, sind die Füsse 20 des Masts 7 mit stabilen Verbindungsblechen 22 am Rahmen 16 befestigt.

Am Rahmen 16 sind auch die Räder angebracht, nämlich das lenkbare Rad 23 und die beiden Laufräder 25 rechts und links, die wegen ihrer Anbringung innen am Rahmen nur zu einem geringen Teil sichtbar sind. Die Anbringung und Konfiguration der Räder 23, 25 wie auch der Antrieb ist an sich bekannt.

In Fig. 1 sind insgesamt vier verschiedene Manipulationseinheiten dargestellt, nämlich der einfache Tisch 14, ein Ständer 24 mit Ablagen 26 ("Hurde": Salzbadgestell), eine Palette 28, auf die Käselaibe 10 einfach gestapelt werden können und schliesslich eine Pflegestation 30.

Die Pflegestation 30 wird an Stelle des Tischs 14 im vorderen Teil 18 des Roboters 1 hineingestellt wie in den Figg. 2 - 4 dargestellt. Die Pflegestation 30 für sich ist gemäss Stand der Technik ausgeführt. Sie umfasst Aggregate zum Waschen und Behandeln der Käselaibe, Vorratsbehälter und Pumpen für die frischen Behandlungsflüssigkeiten, z. B. Waschwasser, und das gegebenenfalls entstehende Abwasser.

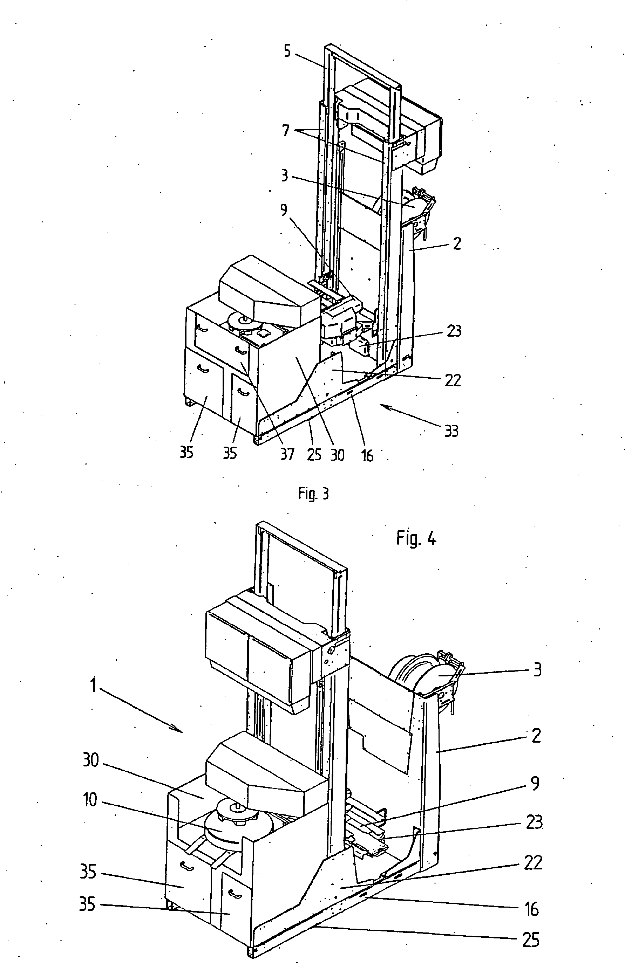

In Fig. 3 ist eine Variante gezeigt, bei der sich der Mast 7 an der Rückwand der Konsole 2 befindet. Da bei dieser Ausführung der Greifer 9 die Käselaibe nicht durch den Mast 5 hindurchtransportieren muss, was einen bestimmten Abstand der Holme 7 bedingt, kann der Käseroboter 33 dieser Ausführung insgesamt schmaler gebaut werden. Andererseits muss bei dieser Bauart ein Käselaib z. B. zum Absetzen in der eingezeichneten Pflegestation 30 freitragend vorn Mast 5 weiter weg bewegt werden, was eine entsprechend stabile Ausführung des Greifers 9, aber auch entsprechende Anpassung des Masts 5 und auch des Rahmens 16 erforderlich macht. Diese Massnahmen liegen jedoch im Bereich des allgemeinen Fachwissens eines Ingenieurs.

Aus den Figg. 2 - 4 geht der Vorteil des Pflegereporters hervor, dass der Käselaib in der Pflegestation 30 auch dann zugänglich ist, wenn sich der Käsepflegeroboter 1 in einem Gang zwischen Regalen befindet. Zusätzlich sind auch jederzeit die Vorratsgefässe 35 für die Betriebsflüssigkeiten der Pflegestation 30 zugänglich. Damit entfällt der Aufwand, diese Flüssigkeiten jeweils vorsorglich aufzufüllen bzw. zu entleeren, wenn der Käsepflegeroboter ein Regal abgearbeitet hat, und die Vorratsgefässe genügend gross zu dimensionieren. Andernfalls mussten die konventionellen Pflegeroboter erst aus einem Regalgang herausgefahren werden, um Zugang zu den Vorratsgefässen der Betriebsflüssigkeiten zu erhalten. Das Energiekabel befindet sich auf der gegenüberliegenden Seite. Die Zufahrt zur Pflegestation und zu den Vorratsgefässen ist daher uneingeschränkt möglich.

Wie in Fig. 4 dargestellt, ist es nun auch möglich, durch Abnehmen der Tür 37 Zugang zum Käselaib 10 zu erhalten und ihn zu kontrollieren oder zu entnehmen, z. B. im Falle einer Betriebsstörung. Weiter besteht so die Möglichkeit, über die Pflegestation ohne weiteres Zubehör Käselaibe ein- und auszulagern.

Insgesamt ergibt sich ein universell einsetzbarer Käsepflegeroboter, der durch Wechseln der Funktionseinheit (Pflegestation 30, Tisch 14 usw.) schnell dem jeweiligen Bedarf angepasst werden kann. Das Einsetzen und Entnehmen der relativ schweren Pflegestation ist mittels eines Gabelstapler-Hubwagens möglich. Nach dem Einsetzen müssen nur die vorhandenen mechanischen Verriegelungen betätigt werden, um einen unverrückbaren Sitz zu gewährleisten, und die elektrischen und gegebenenfalls sonstigen Verbindungen zur Grundeinheit des Roboters hergestellt werden.

Aus der vorangehenden Beschreibung sind dem Fachmann vielfältige Abwandlungen des beschriebenen Käsepflegeroboters zugänglich, ohne den Schutzbereich der Erfindung zu verlassen, der allein durch die Patentansprüche definiert ist. Z. B. kann auf die Auswechselbarkeit der Funktionseinheiten (Pflegestation 30, Tisch 14 usw.) verzichtet und eine derartige Einheit fest eingebaut sein. Der Greifer kann ein Vakuumgreifer sein, mit dem auch Käselaibe von Doppelstapeln auf Europaletten abgearbeitet und die Laibe in Regalen einstellbar sind.

## Patentansprüche

1. Käsepflegeroboter (1, 33) zum Entnehmen und Ablegen von Käselaiben aus bzw. in Regale, **dadurch gekennzeichnet, dass** eine Handhabungseinheit (5, 9) mit Transportmitteln (9) zum Transport von den Käselaiben zwischen Regalen und dem Käsepflegeroboter zwischen einer Bedienungskonsole (2) und einer Pflegestation (30) angeordnet ist, sodass die Pflegestation (30) von vorn und die Bedienungskonsole (2) von hinten während des Aufenthalts des Käsepflegeroboters zwischen zwei Regalen zugänglich ist.

2. Käsepflegeroboter (1) gemäss Anspruch 1, **dadurch gekennzeichnet, dass** die Handhabungseinheit (5, 9) einen Mast (5) umfasst, an dem das Transportmittel (9) vertikal verfahrbar ist, wobei das Transportmittel (9) zwischen dem Mast (5) und der Position der Pflegestation (30) angeordnet ist, sodass ein Käselaib (10), der vom Transportmittel (9) gehalten ist, durch eine Bewegung mittels des Transportmittel vom Mast (5) weg zur Position der Pflegestation (30) bewegbar ist.

3. Käsepflegeroboter (1) gemäss einem der Ansprüche 1 bis 2, **dadurch gekennzeichnet, dass** die Pflegestation (30) vom Käsepflegeroboter abnehmbar ausgeführt ist, sodass an der Position der Pflegestation alternative Funktionsmodule, insbesondere Ablagetische (14), Paletten (28), Ständer mit Ablagen (24), positionierbar sind.

## Claims

1. Cheese tending robot (1, 33) for removing and depositing cheese loaves from and in shelves, respectively, **characterised in that** a handling unit (5, 9) having transport means (9) for the transport of the cheese loaves between shelves and the cheese tending robot is arranged between a control panel (2) and a tending station (30) such that the tending station (30) is accessible from the front and the control panel (2) from the rear when the cheese tending robot is located between two shelves.

2. Cheese tending robot (1) according to claim 1, **characterised in that** the handling unit (5, 9) comprises a pole (5) on which the transport means (9) is vertically displaceable, the transport means (9) being arranged between the pole (5) and the position of the tending station (30) so that a cheese loaf (10) that is being held by the transport means (9) is movable to the position of the tending station (30) by a movement by the transport means away from the pole (5) .

3. Cheese tending robot (1) according to one of claims 1 to 2, **characterised in that** the tending station (30) is designed so as to be removable from the cheese tending robot, thereby allowing alternative functional modules, more particularly lay-down tables (14), pallets (28), stands with shelves (24), to be positioned at the position of the tending station.

## Revendications

1. Robot (1, 33) de soins de fromages pour retirer et déposer des meules de fromages de/dans des étagères, **caractérisé en ce qu'**une unité de manipulation (5, 9) munie de moyens de transport (9) pour le transport des meules de fromage entre des étagères et le robot de soins de fromages est agencée entre un tableau de commande (2) et une station de soins (30) de telle manière que la station de soins (30) est accessible de l'avant et le tableau de commande (2) de l'arrière pendant le séjour du robot de soins de fromage entre deux étagères.

2. Robot (1) de soins de fromages selon la revendication 1, **caractérisé en ce que** l'unité de manipulation (5, 9) comprend un mât (5) sur lequel le moyen de transport (9) est verticalement déplaçable, le moyen de transport (9) étant agencé entre le mât (5) et la position de la station de soins (30), de sorte qu'une meule de fromage (10) retenue par le moyen de transport (9) est déplaçable vers la position de la station de soins (30) par un mouvement l'éloignant du mât (5) effectué par le moyen de transport.

3. Robot (1) de soins de fromages selon l'une des revendications 1 à 2, **caractérisé en ce que** la station de soins (30) est réalisée de manière détachable du robot de soins de fromages, de sorte qu'en position de la station de soins peuvent être positionnés des modules fonctionnels alternatifs, plus particulièrement des tables de dépose (14), des palettes (28), des supports à rayons (24).
